# EUROPÄISCHE PATENTANMELDUNG

(11) **EP 4 706 355 A1**
(43) Veröffentlichungstag der Anmeldung: **11.03.2026**
(21) Anmeldenummer: 25195268.5
(22) Anmeldetag: 12.08.2025
(51) Int. Cl.: A01B 17/00, A01B 61/04

(54) **LANDWIRTSCHAFTLICHE BODENBEARBEITUNGSVORRICHTUNG**

(30) Priorität: 13.08.2024 DE 102024123028
(71) Anmelder: Lemken GmbH & Co KG, 46519 Alpen (DE)
(72) Erfinder: Schläwe, Andreas, 41352 Korschenbroich (DE); Eirmbter, Sebastian, 47877 Willich (DE)

(57) **Zusammenfassung**

Die vorliegende Erfindung betrifft eine landwirtschaftliche Bodenbearbeitungsvorrichtung (1), umfassend ein Rahmenelement (2), an welchem Konsolen (3) angeordnet sind, an denen jeweils zumindest ein durch ein Blattfederelement (4) mit der jeweiligen Konsole (3) verbundenes Bodenbearbeitungsmittel (5) angeordnet ist, wobei das jeweilige Blattfederelement (4) einen rahmenseitigen Montageabschnitt (9) zur Befestigung an der Konsole (3) und einen gegenüberliegenden Befestigungsabschnitt (10) zur Anbringung des zumindest einen Bodenbearbeitungsmittels (5) aufweist, wobei an der Konsole (3) eine Achse (11) angeordnet ist, an der das Blattfederelement (4) mit einem, insbesondere ringförmig ausgeführten, Endsegment (12) des Montageabschnitts (9) angelenkt ist, und dass an der Konsole (3) zur Achse (11) beabstandet zumindest ein Halteelement (13) angeordnet ist, an dem das Blattfederelement (4) relativbeweglich geführt ist.

## Beschreibung

Die vorliegende Erfindung betrifft eine landwirtschaftliche Bodenbearbeitungsvorrichtung gemäß dem Oberbegriff des Anspruches 1.

Landwirtschaftliche Bodenbearbeitungsgeräte wie ein Pflug können mit einer nachlaufenden Bodenbearbeitungsvorrichtung wie einer Packerwalze ausgestattet werden, um die Garebildung des gepflügten Bodens zu begünstigen.

Hierzu umfasst die landwirtschaftliche Bodenbearbeitungsvorrichtung ein Rahmenelement, an welchem Konsolen angeordnet sind, an denen jeweils ein durch ein Blattfederelement mit der jeweiligen Konsole verbundenes Bodenbearbeitungsmittel angeordnet ist. Das jeweilige Blattfederelement weist einen rahmenseitigen Montageabschnitt zur Befestigung an der Konsole und einen gegenüberliegenden Befestigungsabschnitt zur Anbringung des Bodenbearbeitungsmittels auf.

Die Anbindung durch das Blattfederelement dient dazu, dass das an der Bodenbearbeitungsvorrichtung angeordnete Bodenbearbeitungsmittel beim Überfahren von Hindernissen wie Steinen durch ein Verschwenken nach oben ausweichen kann. Des Weiteren dienen die Blattfederelemente dazu, die Bodenbearbeitungsmittel entlang der Ackerfläche mit einer definierten Vorspann-/Anpresskraft zur Einhaltung einer definierten Arbeitstiefe bewegen zu können. Darüber hinaus ist die Anbindung mittels der Blattfederelemente dazu ausgeführt, auch Schwing- und Stoßbewegungen, die beim Vorgang der Rückverfestigung und Krümelung auftreten, zumindest weitgehend zu absorbieren.

Aus der EP 3 868 191 A1 ist eine landwirtschaftliche Bodenbearbeitungsvorrichtung der eingangs genannten Art bekannt. Bei der Bodenbearbeitungsvorrichtung handelt es sich um eine Sämaschine oder eine Bodenbearbeitungsmaschine wie ein Grubber. Bodenbearbeitungsmittel der Bodenbearbeitungsvorrichtung sind mittels Blattfederelementen an einem Rahmenelement federnd gelagert. Zur Befestigung des jeweiligen Blattfederelementes an dem Rahmenelement ist vorgesehen, das Blattfederelement mittels seines rahmenseitigen Montageabschnittes an dem Rahmenelement fest einzuspannen. An den Montageabschnitt schließt sich ein spiralförmiger Teilabschnitt an, welcher in einen geradlinigen Befestigungsabschnitt übergeht, an dem das Bodenbearbeitungsmittel befestigt ist. Der geradlinige Befestigungsabschnitt erstreckt sich durch ein Halteelement, welches die Bewegungsfreiheit des Befestigungsabschnittes seitlich und, indem der Befestigungsabschnitt im Haltelement aufliegt, nach unten begrenzt. Nach oben ist eine Auslenkung des Befestigungsabschnittes und damit des daran angeordneten Bodenbearbeitungsmittels gewollt, um beim Überfahren von Hindernissen nach oben ausweichen zu können.

Bei einer Ausführung des Bodenbearbeitungsgerätes als Pflug, insbesondere als Wendepflug, ist es erforderlich, dass die Bewegungsfreiheit des Befestigungsabschnittes des Blattfederelementes in beide Richtungen begrenzt ist. Dabei führt eine starre Einspannung des rahmenseitigen Montageabschnitts aufgrund der Schwing- und Stoßbewegungen zum Auftreten einer Kerbwirkung in der Oberfläche des Blattfederelementes, was zu erhöhtem Verschleiß und folglich zum Bruch des Blattfederelementes führt.

Ausgehend vom vorstehend genannten Stand der Technik liegt der Erfindung die Aufgabe zugrunde, eine landwirtschaftliche Bodenbearbeitungsvorrichtung der eingangs genannten Art weiterzubilden, welche die aus einer starren Einspannung der Blattfederelemente resultierenden Nachteile überwindet.

Die vorstehend genannte Aufgabe wird durch eine landwirtschaftliche Bodenbearbeitungsvorrichtung mit den Merkmalen des Anspruches 1 gelöst. Vorteilhafte Weiterbildungen sind Gegenstand der abhängigen Ansprüche.

Gemäß dem Anspruch 1 wird eine landwirtschaftliche Bodenbearbeitungsvorrichtung vorgeschlagen, welche ein Rahmenelement umfasst, an welchem Konsolen angeordnet sind, an denen jeweils zumindest ein durch ein Blattfederelement mit der jeweiligen Konsole verbundenes Bodenbearbeitungsmittel angeordnet ist. Das jeweilige Blattfederelement weist einen rahmenseitigen Montageabschnitt zur Befestigung an der Konsole und einen gegenüberliegenden Befestigungsabschnitt zur Anbringung des zumindest einen Bodenbearbeitungsmittels auf. Erfindungsgemäß ist vorgesehen, dass an der Konsole eine Achse angeordnet ist, an der das Blattfederelement mit einem, insbesondere ringförmig ausgeführten, Endsegment des Montageabschnitts angelenkt ist, und dass an der Konsole zur Achse beabstandet zumindest ein Halteelement angeordnet ist, an dem das Blattfederelement relativbeweglich geführt ist.

Durch die gelenkige Verbindung des rahmenseitigen Montageabschnitts und die in Längsrichtung des Blattfederelementes relativbewegliche Führung an dem zumindest einen Halteelement wird die Elastizität des Blattfederelementes im Vergleich zu einer festen Einspannung bei gleicher Einbaulänge vergrößert.

Bevorzugt können an der Konsole zwei einander gegenüberliegende Halteelemente angeordnet sein, zwischen denen das Blattfederelement relativbeweglich geführt ist. Durch die gelenkige Verbindung des rahmenseitigen Montageabschnitts und die in Längsrichtung des Blattfederelementes relativbewegliche Führung zwischen den beiden einander parallel gegenüberliegende Halteelementen wird die Elastizität des Blattfederelementes im Vergleich zu einer festen Einspannung bei gleicher Einbaulänge vergrößert. Dadurch werden die unter Belastung in dem Blattfederelement auftretenden Spannungen deutlich reduziert.

Das, insbesondere ringförmig ausgeführte, Endsegment des Montageabschnitts bildet hierzu mit der Achse ein Loslager. Das Blattfederelement kann sich entsprechend der durch das Bodenbearbeitungsmittel auf diese übertragene Biegebelastung verformen, indem es sich bezüglich des durch eines der beiden Halteelemente gebildeten Drehpunktes beidseitig krümmen kann. Dabei kann das, insbesondere ringförmig ausgeführte, Endsegment des Montageabschnitts eine abschnittsweise Schwenkbewegung um die Achse ausführen.

Durch die erfindungsgemäße Ausgestaltung der Befestigung der Blattfederelemente lässt sich das Gewicht der Bodenbearbeitungsvorrichtung reduzieren, da die der Anordnung und/oder Befestigung dienenden Bauteile, wie die Konsole sowie das Rahmenteil, an welchem die Konsolen befestigt sind, weniger massiv ausgeführt werden müssen.

Bevorzugt kann das, insbesondere ringförmig ausgeführte, Endsegment mit der Achse durch eine Spielpassung verbunden sein. Die Spielpassung erlaubt ein abschnittsweises Verdrehen des Endsegmentes und vermeidet zugleich das Auftreten von Kippbewegung des Blattfederelementes um die Achse. Dies ist insbesondere vorteilhaft, um möglichen Verschleiß zwischen dem, insbesondere ringförmig ausgeführten, Endsegment des Montageabschnitts und der Achse zu minimieren. Die parallelen Schenkel der Konsole begrenzen die Bewegung des Blattfederelementes in seitlicher Richtung.

Weiter bevorzugt kann zur Ausbildung der Spielpassung der Außendurchmesser der Achse kleiner als der Innendurchmesser des ringförmig ausgeführten Endsegmentes sein.

Bevorzugt kann der Befestigungsabschnitt gegenüber dem rahmenseitigen Montageabschnitt um die Längsachse des Blattfederelementes verdreht sein, insbesondere um etwa 90°. Die an dem Befestigungsabschnitt angeordneten Bodenbearbeitungsmittel können somit in einer zum Boden senkrechten Orientierung befestigt werden. Es bedarf keiner zusätzlichen Komponenten, um die zum Boden senkrechte Orientierung des oder der am Blattfederelement angeordneten Bodenbearbeitungsmittel zu erreichen.

Insbesondere kann das zumindest eine Halteelement eine Anlagefläche aufweisen, die mit der Oberfläche des Blattfederelementes in Kontakt steht. Das zumindest eine Halteelement führt das Blattfederelement und begrenzet dabei zugleich die Auslenkung in vertikaler Richtung. Die Begrenzung kann durch die Ausgestaltung der Führung oder durch die parallele Anordnung zweier Halteelemente erreicht werden. Die Begrenzung der Auslenkung kann somit sowohl nach oben als auch nach unten erfolgen.

Dabei kann die Anlagefläche des zumindest einen Halteelementes eine konvex gekrümmte Oberfläche aufweisen. Die konvex gekrümmte Oberfläche der Anlagefläche des zumindest einen Halteelementes ermöglicht ein Abrollen des Montageabschnitts, wodurch einer Kerbwirkung entgegengewirkt werden kann. Eine Linienpressung kann dadurch zumindest weitgehend vermieden werden.

Gemäß einer bevorzugten Weiterbildung kann das zumindest eine Halteelement einen kreissegmentförmigen, insbesondere halbkreisförmigen, Querschnitt oder einen kreiszylindrischen Querschnitt aufweisen.

Das zumindest eine Halteelement kann bevorzugt um Schwenkachsen schwenkbar oder drehbar an der Konsole befestigt sein.

Gemäß einer bevorzugten Weiterbildung ist vorgesehen, dass die Härte des für das zumindest eine Halteelement verwendeten Materials kleiner als die Härte des für das Blattfederelement verwendeten Materials ist. Das für das zumindest eine Halteelement verwendete Material kann hierfür eine höhere Elastizität aufweisen als das für das Blattfederelement verwendete Material. Dabei ist die Elastizität des für das zumindest eine Halteelement verwendeten Materials so gewählt, dass eine Verformung der Anlagefläche und/oder des zumindest einen Halteelementes minimiert wird.

Hierzu können das zumindest eine Halteelement und das Blattfederelement aus unterschiedlichen Materialien oder unterschiedlichen Materialzusammensetzungen hergestellt sein.

Bevorzugt können das zumindest eine Halteelement und das Blattfederelement aus einem metallischen Material, aus einem Kunststoffmaterial, einem gummielastischen Material und/oder aus einem Verbundwerkstoff ausgebildet sein.

Das Blattfederelement kann als lasergeschnittenes Bauteil ausgeführt sein. Dabei kann das, insbesondere ringförmig ausgeführte, Endsegment durch Umformen des Befestigungsabschnittes herstellbar sein. Hierzu kann das ringförmig ausgeführte Endsegment um einen Winkel größer 270° und kleiner als 360° gekrümmt sein. Dadurch, dass der Winkel kleiner als 360° ist, verbleibt zwischen dem freien Ende des Montageabschnitts und dem benachbarten Abschnitt des Montageabschnitts ein Ringspalt.

Insbesondere kann der Abstand zwischen der Achse und dem zumindest einen Halteelement höchstens der Hälfte, insbesondere einem Drittel, besonders bevorzugt einem Viertel der Gesamtlänge des Blattfederelementes entsprechen.

Gemäß einer bevorzugten Weiterbildung kann die im Wesentlichen U-förmig ausgeführte Konsole zwei zueinander parallel verlaufende Schenkel aufweisen, zwischen denen die Achse, das zumindest eine Halteelement und das Blattfederelement lösbar angeordnet sind.

Insbesondere können zur lösbaren Befestigung der das Blattfederelement aufnehmenden Achse und dem zumindest einen Halteelement Schraubenbolzen vorgesehen sein, die sich durch Durchbohrungen in den Schenkeln der Konsole erstrecken. Durch einseitiges oder beidseitiges Verschrauben lassen sich die Achse und das zumindest eine Haltelement respektive die Schwenkachse, auf der das zumindest eine Haltelement schwenkbar angeordnet sein kann, zwischen den Schenkeln der Konsolen befestigen. Weiter bevorzugt können die Schraubenbolzen die Achse und die Schwenkachse des zumindest einen Halteelementes ausbilden.

Bevorzugt kann die Bodenbearbeitungsvorrichtung als ein koppelbares Nachlaufgerät, insbesondere als eine Packerwalze, ausgeführt sein.

Die vorliegende Erfindung wird nachstehend anhand eines in den Zeichnungen dargestellten Ausführungsbeispieles näher erläutert.
- Fig. 1: schematisch und exemplarisch eine perspektivische Ansicht einer als Packer ausgeführten Bodenbearbeitungsvorrichtung;
- Fig. 2: schematisch und exemplarisch eine isometrische Ansicht einer Konsole mit daran angeordnetem Blattfederelement in unbelastetem Zustand;
- Fig. 3: schematisch und exemplarisch eine Seitenansicht der Konsole gemäß Fig. 2;
- Fig. 4: schematisch und exemplarisch eine isometrische Ansicht einer Konsole mit daran angeordnetem Blattfederelement in belastetem Zustand; und
- Fig. 5: schematisch und exemplarisch eine Seitenansicht der Konsole gemäß Fig. 4.

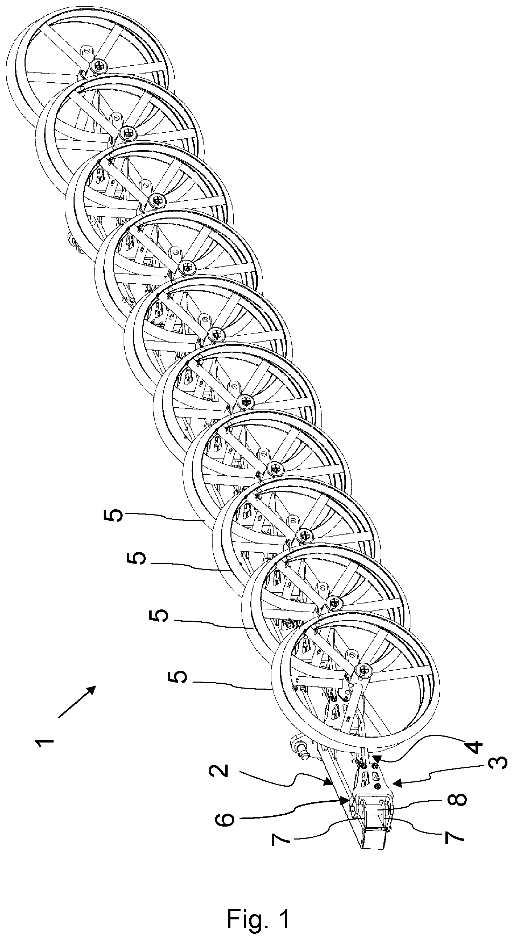

In Fig. 1 ist schematisch und exemplarisch eine perspektivische Ansicht einer als Packer ausgeführten Bodenbearbeitungsvorrichtung 1 dargestellt. Die Bodenbearbeitungsvorrichtung 1 umfasst ein sich in einer Längsrichtung erstreckendes Rahmenelement 2, an welchem U-förmige Konsolen 3 angeordnet sind. An den Konsolen 3 ist jeweils ein durch ein Blattfederelement 4 mit der jeweiligen Konsole 3 verbundenes Bodenbearbeitungsmittel 5 angeordnet. Im dargestellten Ausführungsbeispiel der Bodenbearbeitungsvorrichtung 1 als Packer sind die Bodenbearbeitungsmittel 5 beispielhaft als Ringwalzen ausgebildet. Andere Ausgestaltungen der Bodenbearbeitungsvorrichtung 1 und/oder der Bodenbearbeitungsmittel 5 sind denkbar, die durch ein Blattfederelement 4 miteinander verbunden sind.

Die Konsole 3 weist ein Befestigungssegment 6 auf, welches das einen quaderförmigen Querschnitt aufweisende Rahmenelement 2 in montierter Position abschnittsweise übergreift. Hierzu kann das Befestigungssegment 6 als ein C-Profilabschnitt ausgeführt sein. Das Befestigungssegment 6 ist durch ein Verbindungsmittel 8 mit an dem Rahmenelement 2 angeordneten Laschen 7, insbesondere schwenkbar, verbunden. Die Befestigung der Konsole 3 über das Befestigungssegment 6 am Rahmenelement 2 kann mittels einer Schraubverbindung oder einer Bolzenverbindung als Verbindungsmittel 8 erfolgen.

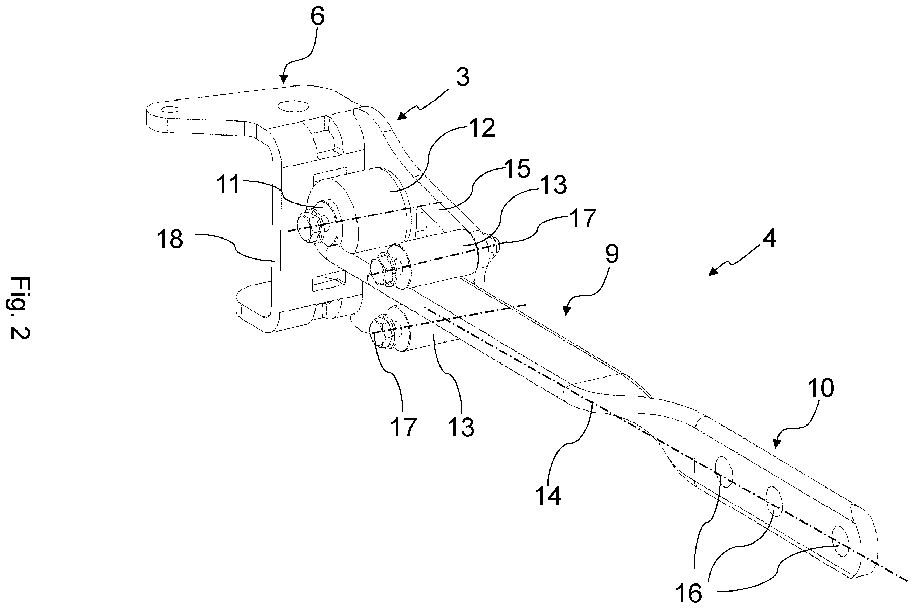

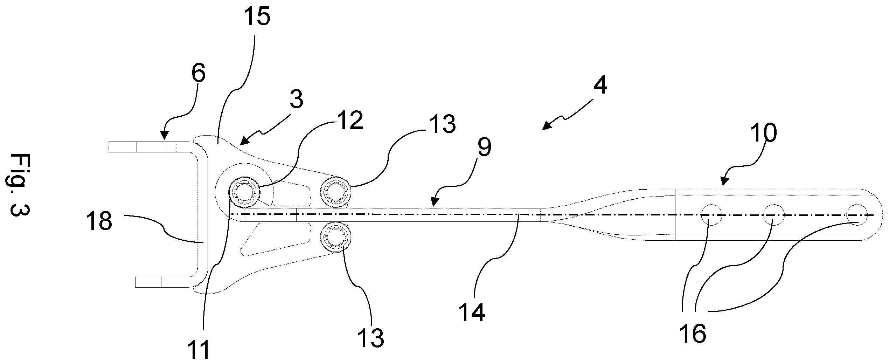

Die Darstellung in Fig. 2 zeigt schematisch und exemplarisch eine isometrische Ansicht der Konsole 3 mit einem daran angeordneten Blattfederelement 4 in unbelastetem Zustand. In Fig. 3 ist schematisch und exemplarisch eine Seitenansicht der Konsole 3 gemäß Fig. 2 dargestellt.

Das Blattfederelement 4 weist einen rahmenseitigen Montageabschnitt 9 zur Befestigung an der Konsole 3 und einen gegenüberliegenden, der Konsole 3 abgewandten Befestigungsabschnitt 10 zur Anbringung des Bodenbearbeitungsmittels 5 auf. Die Konsole 3 kann als Schweißbauteil ausgeführt sein.

An der Konsole 3 ist eine Achse 11 angeordnet ist, an der das Blattfederelement 4 mit einem, insbesondere ringförmig ausgeführten, Endsegment 12 des Montageabschnitts 9 angelenkt ist. Das hier und vorzugsweise ringförmig ausgeführte Endsegment 12 ist um einen Winkel von mehr als 270° gekrümmt. Jedoch ist der Winkel der Krümmung kleiner als 360°, so dass ein Ringspalt zwischen dem freien Ende des Montageabschnitts 9 und dem benachbarten Abschnitt des Montageabschnitts 9 verbleibt.

Axial beabstandet zur Achse 11 ist zumindest ein Halteelement 13 angeordnet, an welchem das Blattfederelement 4 relativbeweglich geführt ist. Hier und vorzugsweise sind zwei einander gegenüberliegende Halteelemente 13 axial beabstandet zur Achse 11 angeordnet, zwischen denen das Blattfederelement 4 relativbeweglich geführt ist. Hierzu erstreckt sich der geradlinige Teil des Montageabschnitts 9 zwischen den beiden Halteelementen 13 hindurch. Mit 14 ist eine Längsachse des Blattfederelementes 4 bezeichnet. Der Befestigungsabschnitt 10 ist gegenüber dem Montageabschnitt 9 um die Längsachse 14 des Blattfederelementes 4 verdreht, insbesondere um etwa 90°.

Die Konsole 3 weist zwei zueinander parallele Schenkel 15 auf, von denen in der Darstellung nur eines dargestellt ist. Die beiden Schenkel 15 sind an einem Wandabschnitt 18 des Befestigungssegments 6 der Konsole 3 beabstandet zueinander angeordnet. Die Achse 11, das ringförmig ausgeführte Endsegment 12, welches um die Achse 11 schwenkbar ist, sowie die beiden Halteelemente 13 sind zwischen den beiden Schenkeln 15 angeordnet. Der Abstand zwischen der Achse 11 und den beiden Halteelementen 13 in Längsrichtung des Blattfederelementes 4 entspricht höchstens der Hälfte, insbesondere einem Drittel, besonders bevorzugt einem Viertel, der Gesamtlänge des Blattfederelementes 4. Der Mindestabstand zwischen der Achse 11 und den Längsachsen 17 der Halteelemente 13 ist derart gewählt, dass der dazwischenliegende Abschnitt des Montageabschnitts 9 eine Verformung durch eine Biegespannung erfahren kann, die bei einer vertikal gerichteten Belastung des Blattfederelementes 4 auftritt.

Der Befestigungsabschnitt 10 kann mit Durchgangsbohrungen 16 ausgeführt sein, welche der Montage des Bodenbearbeitungsmittels 5 oder der Bodenbearbeitungsmittel 5 an dem Blattfederelement 4 dienen. So können beidseitig des Befestigungsabschnittes 10 des Blattfederelementes 4 Bodenbearbeitungsmittel 5 angeordnet sein.

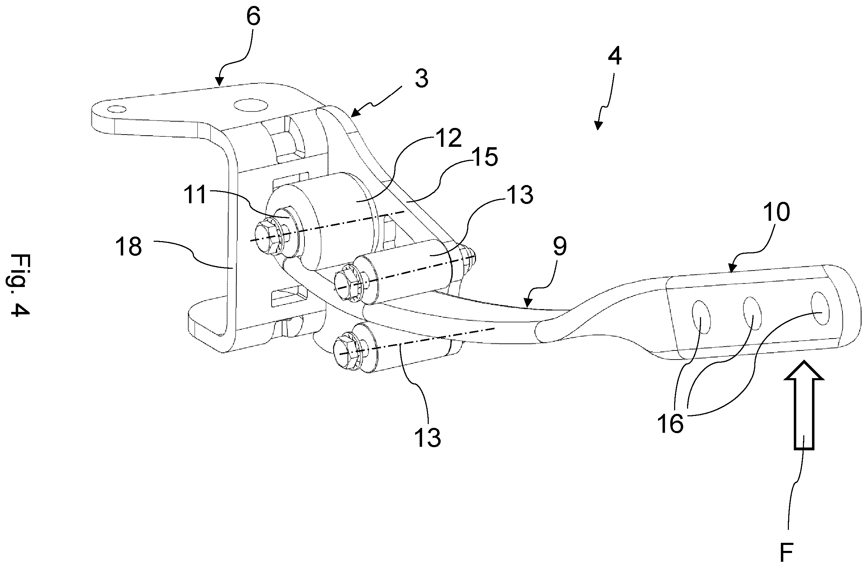

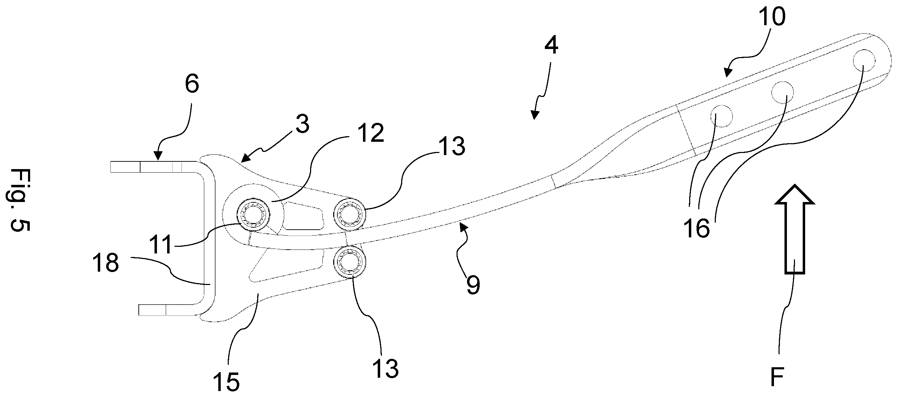

Die Darstellung in Fig. 4 zeigt schematisch und exemplarisch eine isometrische Ansicht der Konsole 3 mit einem daran angeordneten Blattfederelement 4 in belastetem Zustand. In Fig. 5 ist schematisch und exemplarisch eine Seitenansicht der Konsole 3 gemäß Fig. 4 dargestellt.

Die in den Fig. 4 und 5 dargestellte Auslenkung bzw. Krümmung des durch eine vertikal gerichtete Kraft F belasteten Blattfederelementes 4 ist lediglich zum Zweck der besseren Veranschaulichung stärker ausgeprägt dargestellt.

Das ringförmig ausgeführte Endsegment 12 des Montageabschnitts 9 bildet hierzu mit der Achse 11 ein Loslager. Das Blattfederelement 4 kann sich entsprechend der durch das Bodenbearbeitungsmittel 5 auf diese übertragene Biegebelastung verformen, indem es sich bezüglich des durch eines der beiden Halteelemente 13 gebildeten Drehpunktes beidseitig krümmen kann. Durch die gelenkige Verbindung des ringförmig ausgeführten Endsegmentes 12 und die Führung in den beiden Halteelementen 13 wird die Elastizität des Blattfederelementes 4 im Vergleich zu einer festen Einspannung bei gleicher Einbaulänge vergrößert, wodurch die unter Belastung in dem Blattfederelement 4 auftretenden Spannungen deutlich reduziert werden, was die Standzeit signifikant erhöht.

Das jeweilige Halteelement 13 weist eine Anlagefläche auf, die mit der Oberfläche des Blattfederelementes 4 in Kontakt steht. Insbesondere weisen die Anlageflächen der Halteelemente 13 eine konvex gekrümmte Oberfläche auf.

Im einfachsten Ausführungsbeispiel weisen die Halteelemente 13 einen kreiszylindrischen Querschnitt, wie in den Fig. 2 bis 4 dargestellt, auf. Alternativ können die Halteelemente 13 einen kreissegmentförmigen, insbesondere halbkreisförmigen, Querschnitt aufweisen, mit welchem sie der Oberfläche des Blattfederelementes 4 zugewandt zwischen den Schenkeln 15 der Konsole 3 angeordnet sind.

Ein weiterer Aspekt kann die Härte des für die Halteelemente 13 verwendeten Materials sein, welche kleiner als die Härte des für die Blattfeder 4 verwendeten Materials ist. Hierzu können die Halteelemente 13 und die Blattfeder 3 aus unterschiedlichen Materialien oder unterschiedlichen Materialzusammensetzungen hergestellt sein. Wesentlich ist, dass es in Verbindung mit der im Vergleich zum Blattfederelement 4 weicheren Materialpaarung der Halteelemente 13 zu keiner kritischen Linienberührung zwischen den Bauteilen kommt, was einer Kerbentstehung auf der Oberfläche des Blattfederelementes 4 entgegen wirkt.

Hierzu können die Halteelemente 13 und die Blattfeder 4 aus einem metallischen Material, aus einem Kunststoffmaterial, einem gummielastischen Material und/oder aus einem Verbundwerkstoff ausgebildet sein. Das für die Halteelemente 13 verwendete Material kann hierfür eine höhere Elastizität aufweisen als das für die Blattfeder 4 verwendete Material.

Dabei ist die Elastizität des für die Halteelemente 13 verwendeten Materials so gewählt, dass eine Verformung der Anlageflächen und/oder der Halteelemente 13 minimiert wird.

Insbesondere können zur lösbaren Befestigung der das Blattfederelement 4 aufnehmenden Achse 11 und der Halteelemente 13 Schraubenbolzen vorgesehen sein, die sich durch Durchbohrungen in den Schenkeln 15 der Konsole 3 erstrecken. Die Halteelemente 13 können bevorzugt um Schwenkachsen schwenkbar oder drehbar an der Konsole 3 befestigt sein. Durch einseitiges oder beidseitiges Verschrauben lassen sich die Achse 11 und die Haltelemente 13 respektive die Schwenkachsen, auf denen die Haltelemente 13 schwenkbar angeordnet sein können, zwischen den Schenkeln 15 der Konsolen 3 lösbar befestigen. Weiter bevorzugt können die Schraubenbolzen die Achse 11 und die Schwenkachsen für die Halteelemente 13 ausbilden.

### Bezugszeichenliste

- 1: Bodenbearbeitungsvorrichtung
- 2: Rahmenelement
- 3: Konsole
- 4: Blattfederelement
- 5: Bodenbearbeitungsmittel
- 6: Befestigungssegment
- 7: Lasche
- 8: Verbindungsmittel
- 9: Montageabschnitt
- 10: Befestigungsabschnitt
- 11: Achse
- 12: Endsegment
- 13: Halteelement
- 14: Längsachse
- 15: Schenkel
- 16: Durchgangsbohrung
- 17: Längsachse
- 18: Wandabschnitt
- F: Kraft

## Patentansprüche

1. Landwirtschaftliche Bodenbearbeitungsvorrichtung (1), umfassend ein Rahmenelement (2), an welchem Konsolen (3) angeordnet sind, an denen jeweils zumindest ein durch ein Blattfederelement (4) mit der jeweiligen Konsole (3) verbundenes Bodenbearbeitungsmittel (5) angeordnet ist, wobei das jeweilige Blattfederelement (4) einen rahmenseitigen Montageabschnitt (9) zur Befestigung an der Konsole (3) und einen gegenüberliegenden Befestigungsabschnitt (10) zur Anbringung des zumindest einen Bodenbearbeitungsmittels (5) aufweist, **dadurch gekennzeichnet, dass** an der Konsole (3) eine Achse (11) angeordnet ist, an der das Blattfederelement (4) mit einem, insbesondere ringförmig ausgeführten, Endsegment (12) des Montageabschnitts (9) angelenkt ist, und dass an der Konsole (3) zur Achse (11) beabstandet zumindest ein Halteelement (13) angeordnet ist, an dem das Blattfederelement (4) relativbeweglich geführt ist.

2. Landwirtschaftliche Bodenbearbeitungsvorrichtung (1) nach Anspruch 1, **dadurch gekennzeichnet, dass** an der Konsole (3) zwei einander gegenüberliegende Halteelemente (13) angeordnet sind, zwischen denen das Blattfederelement (4) relativbeweglich geführt ist.

3. Landwirtschaftliche Bodenbearbeitungsvorrichtung (1) nach Anspruch 1 oder 2, **dadurch gekennzeichnet, dass** das, insbesondere ringförmig ausgeführte, Endsegment (12) mit der Achse (11) durch eine Spielpassung verbunden ist.

4. Landwirtschaftliche Bodenbearbeitungsvorrichtung (1) nach Anspruch 3, **dadurch gekennzeichnet, dass** zur Ausbildung der Spielpassung der Außendurchmesser der Achse (11) kleiner als der Innendurchmesser des, insbesondere ringförmig ausgeführten, Endsegmentes (12) ist.

5. Landwirtschaftliche Bodenbearbeitungsvorrichtung (1) nach einem der Ansprüche 1 bis 4, **dadurch gekennzeichnet, dass** der Befestigungsabschnitt (10) gegenüber dem Montageabschnitt (9) um die Längsachse (14) des Blattfederelementes (4) verdreht ist, insbesondere um etwa 90°.

6. Landwirtschaftliche Bodenbearbeitungsvorrichtung (1) nach der vorangehenden Ansprüche, **dadurch gekennzeichnet, dass** das zumindest eine Halteelement (13) eine Anlagefläche aufweist, die mit der Oberfläche des Montageabschnitts (4) in Kontakt steht.

7. Landwirtschaftliche Bodenbearbeitungsvorrichtung (1) nach Anspruch 6, **dadurch gekennzeichnet, dass** die Anlagefläche des zumindest einen Halteelementes (13) eine konvex gekrümmte Oberfläche aufweist.

8. Landwirtschaftliche Bodenbearbeitungsvorrichtung (1) nach einem der vorangehenden Ansprüche, **dadurch gekennzeichnet, dass** das zumindest eine Halteelement (13) einen kreissegmentförmigen, insbesondere halbkreisförmigen, Querschnitt oder einen kreiszylindrischen Querschnitt aufweist.

9. Landwirtschaftliche Bodenbearbeitungsvorrichtung (1) nach einem der vorangehenden Ansprüche, **dadurch gekennzeichnet, dass** die Härte des für das zumindest eine Halteelement (13) verwendeten Materials kleiner als die Härte des für das Blattfederelement (4) verwendeten Materials ist.

10. Landwirtschaftliche Bodenbearbeitungsvorrichtung (1) nach Anspruch 9, **dadurch gekennzeichnet, dass** das zumindest eine Halteelement (13) und das Blattfederelement (4) aus einem metallischen Material, aus einem Kunststoffmaterial, einem gummielastischen Material und/oder aus einem Verbundwerkstoff ausgebildet sind.

11. Landwirtschaftliche Bodenbearbeitungsvorrichtung (1) nach einem der vorangehenden Ansprüche, **dadurch gekennzeichnet, dass** das, insbesondere ringförmig ausgeführte, Endsegment (12) durch Umformen des Montageabschnittes (9) herstellbar ist.

12. Landwirtschaftliche Bodenbearbeitungsvorrichtung (1) nach einem der vorangehenden Ansprüche, **dadurch gekennzeichnet, dass** der Abstand zwischen der Achse (11) und dem zumindest einen Halteelement (13) höchstens der Hälfte, insbesondere einem Drittel, besonders bevorzugt einem Viertel, der Gesamtlänge des Blattfederelementes (4) entspricht.

13. Landwirtschaftliche Bodenbearbeitungsvorrichtung (1) nach einem der vorangehenden Ansprüche, **dadurch gekennzeichnet, dass** die im Wesentlichen U-förmig ausgeführte Konsole (3) zwei zueinander parallel verlaufende Schenkel (15) aufweist, zwischen denen die Achse (11), das zumindest eine Halteelement (13) und das Blattfederelement (4) lösbar angeordnet sind.

14. Landwirtschaftliche Bodenbearbeitungsvorrichtung (1) nach Anspruch 13, **dadurch gekennzeichnet, dass** zur lösbaren Befestigung der das Blattfederelement (4) aufnehmenden Achse (11) und des zumindest einen Halteelementes (13) Schraubenbolzen vorgesehen sind, die sich durch Durchbohrungen in den Schenkeln (15) der Konsole (3) erstrecken.

15. Landwirtschaftliche Bodenbearbeitungsvorrichtung (1) nach einem der vorangehenden Ansprüche, **dadurch gekennzeichnet, dass** die Bodenbearbeitungsvorrichtung (1) als ein koppelbares Nachlaufgerät, insbesondere als eine Packerwalze, ausgeführt ist.
